## Europäisches Patentamt

(19) **European Patent Office**

**Office européen des brevets**

(11) Veröffentlichungsnummer: **0 068 447**
**B1**

(12) ## EUROPÄISCHE PATENTSCHRIFT

(45) Veröffentlichungstag der Patentschrift:
**01.04.87**

(51) Int. Cl.⁴: **A 22 C 17/00, B 26 D 7/20**

(21) Anmeldenummer: **82105559.7**

(22) Anmeldetag: **24.06.82**

(54) **Hack- und Schlagblock.**

(30) Priorität: **26.06.81 DE 3125080**

(73) Patentinhaber: **PTE Patent Trading Establishment, Schaanerstrasse 13, FL-9490 Vaduz (LI)**

(43) Veröffentlichungstag der Anmeldung:
**05.01.83 Patentblatt 83/1**

(72) Erfinder: **Kyburz, Helmut, Rebhalde 7, D-7778 Markdorf (DE)**

(45) Bekanntmachung des Hinweises auf die Patenterteilung:
**01.04.87 Patentblatt 87/14**

(74) Vertreter: **Patentanwälte Dipl.-Ing. E. Eisele Dr.-Ing. H. Otten, Seestrasse 42, D-7980 Ravensburg (DE)**

(84) Benannte Vertragsstaaten:
**AT BE CH DE FR GB LI NL SE**

(56) Entgegenhaltungen:
**CH - A - 260 261**
**DE - C - 14 999**
**DE - C - 201 778**
**DE - C - 237 375**
**DE - C - 346 859**
**DE - C - 398 833**
**DE - U - 7 405 968**
**FR - A - 2 224 090**

ACTORUM AG

# Beschreibung

Die Erfindung betrifft einen Hack- und Schlagblock zur Verwendung in fleisch- oder blechverarbeitenden Betrieben nach dem ersten Teil des Anspruchs 1.

Für fleischverarbeitende Betriebe sind Hackblöcke bekannt, die aus Holz, zumeist Stirnholz aus Weissbuche in verschiedenen Grössen und Stärken bestehen. Das Stirnholz, welches in Faserlängsrichtung schlagend beansprucht wird, hat den Vorteil, dass es nicht beim Schlag zurückfedert, d.h. dass es gut dämpft. Als Spezialausdruck hierfür wird folgender Begriff verwendet: Stirnholz «zieht» gut.

In fleischverarbeitenden Betrieben haben Hackblöcke aus Holz jedoch den Nachteil, dass ihre Arbeitsfläche unter dem Einfluss der Hack- und Schneidwerkzeuge sehr leicht und schnell uneben werden und tiefe Kerben und Ritzen erhalten, in denen Fleisch-, Fett- und Knochenreste zurückbleiben können. Aufgrund gesundheitspolizeilicher Vorschriften müssen die Arbeitsflächen derartiger Hackblöcke daher regelmässig und gründlich gereinigt werden, was bisher nur durch zeit- und kraftraubendes Abschaben der Oberfläche der Arbeitsfläche möglich war, da sich ihre Reinigung mit Wasser wegen der Saugfähigkeit des Holzes und der damit verbundenen Gefahr bakterieller Verunreinigung verbietet.

Um diesem Nachteil Abhilfe zu schaffen, sind Hackblöcke aus Metall oder Beton mit einer Arbeitsplatte aus zähem, schlagfestem und splitterfreiem Kunststoff bekannt geworden. Bei derartigen bekannten Hackblöcken hat es sich in der Praxis gezeigt, dass die Kunststoffplatte nicht die dämpfende Eigenschaft von Stirnholz aufweist, d.h. die Kunststoffplatte «zieht» nicht. Hiermit sind jedoch für das bearbeitende Personal erhebliche Nachteile verbunden, da jeder Schlag mehr oder weniger stark zurückfedert und somit die Armmuskulatur und die Armsehnen erheblich belastet. Dies hatte zur Folge, dass die Hackblöcke mit Kunststoffarbeitsplatte nicht oder nur ungern verwendet wurden.

Aus der FR-A 2 224 090 ist ein Hack- bzw. Schlagblock mit einer Kunststoff-Arbeitsplatte bekannt geworden, bei welchem der Schlag bzw. die Nachfederung mittels darunter angeordnetem nassen Sand gedämpft werden soll. Da dieser Sand jedoch nicht fest mit der Kunststoffplatte verbunden ist, durch die Schlagbeanspruchung sich darüber hinaus auch noch absetzt, kann ein ausreichender Dämpfungseffekt hiermit nicht erzielt werden. Insbesondere kann bei dieser bekannten Einrichtung eine Änderung der Verspannung zwischen dem Sand sowie der Arbeitsplatte während der Betriebszeit nicht herbeigeführt werden.

Aus der DE-C 201 778 ist weiterhin ein Hauklotz aus Holz bekannt geworden, der Mittel zur federnden Lagerung aufweist, so dass Erschütterungen gegenüber der Bodenfläche bei Benutzung des Haublocks vermieden werden. Dies geschieht durch einen aufblasbaren Gummischlauchreifen zur Dämpfung der Schlagbewegung gegenüber der Bodenfläche. Eine weitere federnde Lagerung zwischen dem Hauklotz und dem Fussgestell wird durch zusätzlich vorgesehene Spindel mit Schraubenfedern durchgeführt.

Dieser bekannte Haublock vermittelt jedoch keine Anregungen zur Ausgestaltung eines Hack- und Schlagblocks mit Kunststoff-Arbeitsplatte mit Mitteln zur Dämpfung der Schlagbewegung gegenüber der Benutzerperson.

Der vorliegenden Erfindung liegt die Aufgabe zugrunde, einen Hack- und Schlagblock mit Kunststoff-Arbeitsplatte zu schaffen, der in seinem Schlagverhalten weitgehend demjenigen von Stirnholz entspricht, d.h. bei welchem ein Nachfedern der Kunststoff-Arbeitsplatte bei Schlagbeanspruchung vermieden wird.

Diese Aufgabe wird durch die kennzeichnenden Merkmale des Hauptanspruchs gelöst.

Die Erfindung geht von der Erkenntnis aus, dass selbst kleinste Spalten oder Zwischenräume zwischen einer Kunststoffarbeitsplatte und einer darunterliegenden Tragplatte oder einem Traggestell zu Vibrationen bzw. Zittern der Arbeitsplatte führen. Durch die andauernde schlagende und hakkende Beanspruchung der Arbeitsplatte wird eine eventuell feste Verbindung zwischen Arbeitsplatte aus Kunststoff und Unterlage immer labiler, sodass sich selbst eingegossene Kunststoffplatten mit der Zeit vom Untergrund durch schlagende Beanspruchung ablösen und zu Armverletzungen in Form von Nervenentzündungen beim Bedienungspersonal führen. Gemäss der Erfindung wird dieser Nachteil dadurch behoben, dass ständig ein erheblicher Gegendruck auf die Arbeitsplattenunterseite einwirkt und somit ein Vibrieren der Arbeitsplatte beim Schlagen und Hacken vermieden wird. Kern der Erfindung ist es deshalb, unterhalb der Arbeitsplatte aus Kunststoff ein Mittel vorzusehen, welches ständig in erheblichem Masse gegen die Unterseite der Arbeitsplatte drückt, um somit ein dem Holz ähnliches Arbeitsverhalten zu erzielen, d.h. die Kunststoffplatte «zieht» bei schlagender und hackender Beanspruchung.

Als Mittel zur Beaufschlagung der Arbeitsplattenunterseite mit Druck kommen die verschiedensten Einrichtungen in Frage. Hier können insbesondere auch die Erkenntnisse aus der Pressentechnik Anwendung finden.

Die Erfindung eignet sich nicht nur für fleischverarbeitende Betriebe sondern auch überall dort, wo Kunststoffplatten oder auch Metallplatten schlagenden Beanspruchungen unterworfen sind und wo ein Nachfedern der Arbeitsplatte weitgehend vermieden werden soll. Demzufolge ist eine Anwendung in blechverarbeitenden Betrieben, im Karosseriebau, bei Flaschnern oder dergleichen denkbar.

Der sogenannte «Zieheffekt» wird gemäss der Erfindung durch die unter der Arbeitsplatte befindliche grosse Masse, die fest gegen die Arbeitsplattenunterseite drückt, erreicht. Als Dämpfungsmaterial unterhalb der Kunststoffarbeitsplatte kommt festes Material, z.B. Schüttgut, z.B. Kies, Stahlkugeln oder dergleichen, oder ein Hydraulikmedium in Frage. Die Menge der dämpfenden Masse richtet sich nach Art und Umfang der schlagenden Beanspruchung der Arbeitsplatte. Wichtig ist, dass die verhältnismässig grosse Masse ständig gegen die Arbeitsplattenunterseite gedrückt wird.

Durch die in den Unteransprüchen aufgeführten Massnahmen ist eine vorteilhafte Weiterbildung und Verbesserung des im Hauptanspruch angegebenen Hack- und Schlagblocks möglich.

Die vorteilhafte Ausbildung der Erfindung nach Unteranspruch 2 sieht neben der bekannten Verwendung von Sand als Schüttgut auch Kies, Stahlkugeln o.dgl. vor.

Besonders vorteilhaft ist weiterhin, dass zwischen der Verspanneinrichtung und einer auf das Schüttgut einwirkenden Druckplatte wenigstens ein elastisches Zwischenstück oder Polster angeordnet ist. Dieses Zwischenstück ist vorteilhafterweise als Gummifeder, Tellerfeder, Schraubenfeder oder als pneumatisches Druckkissen ausgebildet. Durch dieses Zwischendruckstück wird erreicht, dass ein ständiges Nachdrücken, z.B. des sich durch die schlagende Beanspruchung setzenden Schüttgutes gewährleistet ist, ohne dass sofort an der Verspanneinrichtung verstellt werden muss.

Zur Befestigung der Arbeitsplatte mit dem Rahmengestell ist es gemäss Unteranspruch 5 weiterhin vorteilhaft, dass die Arbeitsplatte eine horizontal verlaufende Nut oder Nutsegmente aufweist, in die Teile des Rahmengestells eingreifen. Dies kann in Ausgestaltung der Erfindung dadurch geschehen, dass das Traggestell im Bereich der Arbeitsplatte mehrere abnehmbare L-förmige Haltehaken aufweist die in die Nut oder Nuten der Arbeitsplatte eingreifen. Bei z.B. rechteckförmiger Ausgestaltung der Arbeitsplatte genügt ein abnehmbarer L-förmiger Haltehaken um die Arbeitsplatte vom Rahmengestell seitlich abziehen zu können. Zuvor muss jedoch der Druck von unten aufgehoben werden. Durch diese einfache Massnahme kann die Arbeitsplatte leicht ausgewechselt und eventuell gedreht werden. Die Oberfläche derartiger Arbeitsplatten muss bei hackender Beanspruchung von Zeit zu Zeit z.B. spanabhebend nachbearbeitet werden.

Gemäss der vorteilhaften Weiterbildung der Erfindung nach Unteranspruch 6 kann das Traggestell im oberen Bereich als Gehäuse zur Aufnahme des Schüttguts ausgebildet sein.

In Ausbildung der Erfindung nach Unteranspruch 7 erfolgt die Lagerung der Verspanneinrichtung mittels einer am Rahmengestell befestigten Stützplatte.

Bei Ausführung der Verspanneinrichtung als in vertikaler Richtung bewegbare mechanische Spindel ergibt sich ein besonders einfacher Aufbau des Hack- und Schlagblocks. Die Hubspindel kann jedoch auch über ein Untersetzungsgetriebe elektrisch angetrieben werden.

In Ausbildung der Erfindung nach Unteranspruch 9 kann anstelle einer Spindel eine Verspanneinrichtung in Form eines mechanischen oder hydraulischen Wagenhebers verwendet werden.

Gemäss Unteranspruch 10 befindet sich unterhalb der Arbeitsplatte ein hydraulisches Kissen, welches durch Druckbeaufschlagung gegen die Arbeitsplatten-Unterseite gedrückt wird und die dämpfende Masse darstellt. Eine derartige Anordnung ist jedoch von der Konstruktion her aufwendiger und der Einsatz dementsprechend nur für Sonderfälle sinnvoll.

Vorteilhaft ist gemäss Unteranspruch 11 weiterhin, dass als Kunststoff-Arbeitsplatte ein Niederdruck-Polyäthylen-Kunststoff mit einer Dicke von ca. 50 mm verwendet wird, da dieser besonders zäh, schlagfest und splitterarm ist. Dies ist bei der Verwendung des Hackblocks in fleischverarbeitenden Betrieben besonders wichtig. Selbstverständlich können auch andere geeignete Kunststoffarten in geeigneten Dicken verwendet werden. Die Dicke der Kunststoffplatte darf nicht zu stark sein, damit diese nicht in sich federt.

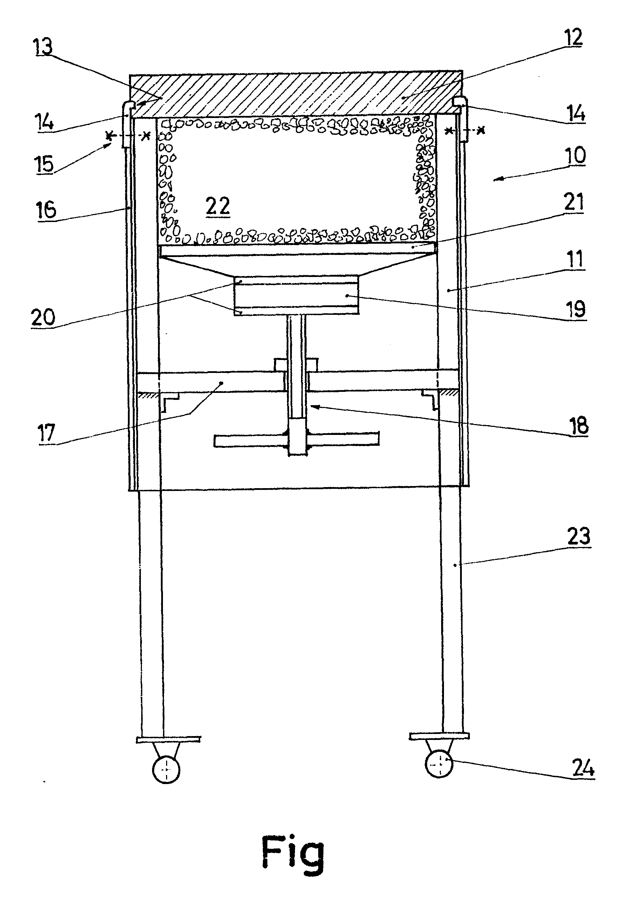

Ein Ausführungsbeispiel der Erfindung ist in der Zeichnung dargestellt und der nachfolgenden Beschreibung unter Angabe weiterer Vorteile näher erläutert. Es zeigen Fig. 1 eine schematische Seitenansicht des erfindungsgemässen Hack- und Schlagblocks.

Der in der Figur dargestellte Hack- und Schlagblock 10 besteht aus einem Trag- oder Rahmengestell 11 aus Profilmaterial insbesondere aus U- oder Vierkantprofil aus Stahl, Aluminium oder dergleichen in rechteckiger oder quadratischer Bauweise. Die Arbeitsplatte 12 ist aus zähem, schlagfestem, splitterarmen Kunststoff, insbesondere aus Niederdruck-Polyäthylen hergestellt. Die Kunststoffplatte 12 weist seitlich an ihrem Umfang eine Nut 13 oder Nutensegmente auf. In diese Nutensegmente greifen L-förmige Haltehaken 14 ein die ihrerseits fest mit dem Rahmengestell 11 verbunden sind. Mittels einer Schraubvorrichtung 15 können die L-förmigen Haltehaken jedoch zumindest zum Teil vom Rahmengestell 11 gelöst und die Arbeitsplatte 12 abgehoben werden. Das Rahmengestell 11 kann aussen mit Verkleidungsblechen 16 versehen sein.

Im unteren Bereich des Trag- oder Rahmengestells ist eine Stützplatte 17 mittels einer Schweiss- oder Schraubkonstruktion befestigt. An dieser horizontal angeordneten Stützplatte 17 stützt sich eine in vertikaler Richtung verlaufende Spindel 18 ab. Die Spindel 18 ist im oberen Bereich mit einer Gummifeder 19 verbunden, die oben und unten von jeweils einer Metallplatte 20 begrenzt ist. Die Gummifeder 19 ist im oberen Bereich mit einer Druckplatte 21 verbunden.

Zwischen der Arbeitsplatte 12 und der Druckplatte 21 befindet sich eine Masse 22 die im Ausführungsbeispiel aus Schüttgut besteht. Als Schüttgut 22 kann Sand, Kies, Stahlkugeln oder dergleichen verwendet werden. Das Material sollte so beschaffen sein, dass es eine Druckbeaufschlagung möglichst gleichmässig weitergibt und dämpft. Insofern wäre die Verwendung eines Hydraulikmediums zur Druckbeaufschlagung der Arbeitsplatte von der Unterseite her vorteilhaft. Die Masse 22 darf nicht zu gering bemessen werden, damit sie den auf die Arbeitsplatte auftreffenden Schlag abfangen und dämpfen kann.

Anstelle der Gewindespindel 18 kann auch eine andere hydraulische oder elektrische Hubvorrichtung, z.B. nach Art eines Wagenhebers, verwendet werden. Die Gummifeder 19 kann je nach Grösse der Platte 12 an mehreren Stellen der Druckplatte 21 zur gleichmässigen Druckverteilung einwirken.

Die Einrichtung wirkt wie folgt, nach dem die Arbeitsplatte 12 mittels den L-förmigen Haltehaken oder Krallen an das Trag- oder Rahmengestell befestigt worden ist, wird die Spindel 18 durch Drehung nach oben bewegt. Das unterhalb der Arbeitsplatte 12 angeordnete Schüttgut 22 wird mittels der Druckplatte 21 nach oben gegen die Unterseite der Arbeitsplatte 12 gepresst. Der Druck kann durch anziehen der Spindel 18 variiert und insbesondere nach Setzen des Schüttguts nachgestellt werden.

Die Druckfeder 19, die auch als Tellerfeder oder Schraubenfeder ausgebildet sein kann, gewährleistet ein Nachschieben der Druckplatte 21, sofern sich das Schüttgut durch die schlagende Beanspruchung setzt.

Wesentlich ist, dass die Masse 22 mittels der Verspanneinrichtung 18, 19, 21 immer fest gegen die Unterseite der Arbeitsplatte 12 gepresst wird.

Der Hackblock kann mit verstellbaren Metallfüssen 23, mit Gummi- oder Kunststoff-Füssen oder mit feststellbaren Rädern 24 versehen werden.

Die Arbeitsplatte 12 ist leicht auswechselbar: durch Lösen der Spindel 18 senkt sich die Druckplatte 21 nach unten und die Kunststoffplatte 12 wird entlastet. Die lösbare Halte-Klaue 14 wird entfernt, die Kunststoffplatte herausgezogen und durch eine andere Platte ersetzt oder umgedreht. Die Befestigung geht in umgekehrter Reihenfolge.

## Patentansprüche

1. Hack- und Schlagblock zur Verwendung in fleisch- oder blechverarbeitenden Betrieben, bestehend aus einem Rahmengestell (11) für eine mit dem Gestell im Betriebszustand fest verbundene Arbeitsplatte (12) aus zähem, schlagfestem, splitterarmen Kunststoff oder Metall, wobei unterhalb der Arbeitsplatte eine Masse (22) aus Schüttgut wie Sand o.dgl. zur Schlagdämpfung angeordnet ist, dadurch gekennzeichnet, dass die unmittelbar unter der Arbeitsplatte (12) angeordnete Masse (22) schlagdämpfend und druckfortpflanzend ausgebildet ist und gegen die Unterseite der Arbeitsplatte (12) mittels einer Verspanneinrichtung (14, 17, 18, 21) fest verspannbar ist, wobei sich die von unten mit Druck beaufschlagte Arbeitsplatte (12) am Rahmengestell (11) abstützt.

2. Block nach Anspruch 1, dadurch gekennzeichnet, dass unterhalb der Arbeitsplatte (12) ein Schüttgut (22) wie Sand, Kies, Stahlkugeln o.dgl. angeordnet ist.

3. Block nach Anspruch 2, dadurch gekennzeichnet, dass zwischen der Verspanneinrichtung (14, 17, 18, 21) und einer zugehörigen Druckplatte (21) wenigstens ein elastisches Zwischenstück (19) und/oder Polster angeordnet ist.

4. Block nach Anspruch 3, dadurch gekennzeichnet, dass das Zwischenstück oder Polster (19) als Gummifeder, Tellerfeder, Schraubenfeder oder pneumatisches Druckkissen ausgebildet ist.

5. Block nach einem oder mehreren der vorhergehenden Ansprüche 1 bis 4, dadurch gekennzeichnet, dass die Arbeitsplatte (12) eine horizontal verlaufende Nut oder Nutsegmente (13) aufweist, in die Teile (14) wie abnehmbare L-förmige Haltehaken (14) oder Krallen des Rahmengestells (11) eingreifen.

6. Block nach Anspruch 1, dadurch gekennzeichnet, dass das Rahmengestell (11) im oberen Bereich als Gehäuse zur Aufnahme des Schüttguts (22) ausgebildet ist.

7. Block nach Anspruch 1, dadurch gekennzeichnet, dass die Lagerung der Verspanneinrichtung (14, 17, 18, 21) mittels einer am Rahmengestell (11) befestigten Stützplatte (17) erfolgt.

8. Block nach Anspruch 1 oder 7, dadurch gekennzeichnet, dass die Verspanneinrichtung (14, 17, 18, 21) als mechanisch oder elektrisch antreibbare Spindel (18) ausgebildet ist.

9. Block nach Anspruch 1 oder 7, dadurch gekennzeichnet, dass die Verspanneinrichtung (14, 17, 18, 21) nach Art eines Wagenhebers, insbesondere hydraulischen Wagenhebers ausgebildet ist.

10. Block nach Anspruch 1, dadurch gekennzeichnet, dass die Masse (22) als hydraulisches Kissen ausgebildet ist.

11. Block nach Anspruch 1, dadurch gekennzeichnet, dass die Arbeitsplatte aus lebensmittelechtem Kunststoff, insbesondere aus Niederdruck-Polyäthylen mit einer Dicke von ca. 50 mm besteht.

## Claims

1. Chopping and hammering block for use in meat-processing or sheet-metal fabrication plants, consisting of a frame stand (11) for a workboard (12) connected firmly to the stand in the operating state and made of tough, impact-resistant and splinter-proof plastic or metal, a mass (22) of loose material, such as sand or the like, being arranged underneath the workboard for absorbing impacts, characterized in that the mass (22) arranged immediately underneath the workboard (12) is designed to absorb impacts and transmit pressure and can be braced firmly against the underside of the workboard (12) by means of a bracing device (14, 17, 18, 21), the workboard (12) subject to pressure from below being supported on the frame stand (11).

2. Block according to Claim 1, characterized in that a loose material (22), such as sand, gravel, steel balls or the like, is arranged underneath the workboard (12).

3. Block according to Claim 2, characterized in that at least one elastic intermediate piece (19) and/or cushion is arranged between the bracing device (14, 17, 18, 21) and an associated pressure plate (21).

4. Block according to Claim 3, characterized in that the intermediate piece or cushion (19) is designed as a rubber spring, cup spring, helical spring or pneumatic pressure pad.

5. Block according to one or more of the preceding Claims 1 to 4, characterized in that the workboard (12) has a horizontal groove or groove segments (13), into which engage parts (14), such as removable L-shaped retaining hooks (14) or claws, of the frame stand (11).

6. Block according to Claim 1, characterized in that the frame stand (11) is designed in the upper region as a housing for receiving the loose material (22).

7. Block according to Claim 1, characterized in that the bracing device (14, 17, 18, 21) is mounted by means of a support plate (17) fastened to the frame stand (11).

8. Block according to Claim 1 or 7, characterized in that the bracing device (14, 17, 18, 21) is designed as a spindle (18) which can be driven mechanically or electrically.

9. Block according to Claim 1 or 7, characterized in that the bracing device (14, 17, 18, 21) is designed in the manner of a vehicle lifting jack, especially a hydraulic vehicle lifting jack.

10. Block according to Claim 1, characterized in that the mass (22) is in the form of a hydraulic cushion.

11. Block according to Claim 1, characterized in that the workboard consists of plastic compatible with food, especially of low-pressure polyethylene with a thickness of approximately 50 mm.

## Revendications

1. Bloc de battage et de hachage utilisable dans des installations de traitement de viande ou de plaque métallique, constitué d'un bâti (11) pour une plaque de travail (12) reliée rigidement dans l'état de service au bâti, la plaque étant réalisée en matière synthétique ou métal tenace, résistant aux chocs et à la fragmentation, une masse (22) de matière en vrac, comme du sable ou analogue, pour l'amortissement des coups étant disposée au-dessous de la plaque de travail, caractérisé en ce que la masse (22) disposée directement sous la plaque de travail (12) est réalisée de façon à amortir les coups et à transmettre la pression, et peut être pressée fortement contre le dessous de la plaque de travail (12) au moyen d'un dispositif de tension (14, 17, 18, 21), la plaque de travail (12) pressée d'en bas s'appuyant contre le bâti (11).

2. Bloc selon la revendication 1, caractérisé en ce que, au-dessous de la plaque de travail (12), est disposée une matière en vrac (22), comme du sable, du gravier, des billes d'acier ou analogue.

3. Bloc selon la revendication 2, caractérisé en ce que, entre le dispositif de tension (14, 17, 18, 21) et une plaque de pression (21) qui en fait partie, sont disposés au moins une pièce intermédiaire (19) et/ou un rembourrage.

4. Bloc selon la revendication 3, caractérisé en ce que le rembourrage ou la pièce intermédiaire (19) est réalisé sous forme d'un ressort en caoutchouc, d'un ressort à disques, d'un ressort à boudin ou d'un tampon presseur.

5. Bloc selon une ou plusieurs des revendications précédentes 1 à 4, caractérisé en ce que la plaque de travail (12) présente une rainure ou des segments de rainure (13) s'étendant horizontalement, dans laquelle ou dans lesquels s'engagent des parties (14), comme des crochets de maintien (14) amovibles en forme de L, ou des griffes du bâti (11).

6. Bloc selon la revendication 1, caractérisé en ce que la partie supérieure du bâti (11) est réalisée sous forme de logement pour recevoir la matière en vrac (22).

7. Bloc selon la revendication 1, caractérisè en ce que le dispositif de tension (14, 17, 18, 21) est monté au moyen d'une plaque d'appui (17) fixée au bâti (11).

8. Bloc selon la revendication 1 ou 7, caractérisé en ce que le dispositif de tension (14, 17, 18, 21) comprend un arbre (18) entraînable électriquement ou mécaniquement.

9. Bloc selon la revendication 1 ou 7, caractérisé en ce que le dispositif de tension (14, 17, 18, 21) comprend un vérin, en particulier un vérin hydraulique.

10. Bloc selon la revendication 1, caractérisé en ce que la masse (22) est réalisée sous forme d'un coussin hydraulique.

11. Bloc selon la revendication 1, caractérisé en ce que la plaque de travail est constituée en matière synthétique alimentaire, en particulier du polyéthylène à basse pression, d'une épaisseur d'environ 50 mm.

Fig